# FASCICULE DE BREVET EUROPEEN

(11) **EP 1 672 226 B1**
(45) Date de publication et mention de la délivrance du brevet: **21.11.2012**
(21) Numéro de dépôt: 05301008.8
(22) Date de dépôt: 06.12.2005
(51) Int. Cl.: F16B 2/08, F16L 3/123, F16L 33/02, F16L 3/14

(54) **Dispositif de fixation d'une pièce sur un moteur de véhicule automobile et utilisation du dispositif pour la fixation d`un catalyseur**
Befestigungsvorrichtung eines Teils an einem Kraftfahrzeugmotor und Verwendung der Vorrichtung zur Befestigung eines Katalysators
Fastening device of an element on an automobile motor and use of same for fastening a catalytic converter

(30) Priorité: 14.12.2004 FR 0413265
(43) Date de publication de la demande: 21.06.2006
(73) Titulaire: Renault, 92109 Boulogne Billancourt (FR)
(72) Inventeur: BOURI, Dominique, 95220, HERBLAY (FR); GRATIAN, Jean Louis, 95200, SARCELLES (FR); BOUFFET, David, LE CHESNAY, 78150 (FR)

(56) Documents cités:
- FR-A- 2 631 678
- GB-A- 430 142
- GB-A- 914 403
- US-A- 4 779 828

## Description

L'invention concerne un dispositif de fixation d'une pièce sur un moteur de véhicule automobile ainsi que son utilisation à la fixation d'un catalyseur.

Les dispositifs de fixation utilisés actuellement conduisent à la formation de contraintes statiques élevées lors de la fixation de la pièce, pouvant résulter en une diminution de la durabilité de cette dernière.

Il est par ailleurs nécessaire d'utiliser des gabarits de maintien en position pendant le serrage de la pièce afin que le serrage puisse être effectué en "mains libres", c'est-à-dire sans avoir à maintenir la pièce. Ces gabarits sont toutefois souvent compliqués, augmentant ainsi le risque de mauvaise utilisation entraînant la formation de contraintes dans l'assemblage.

Il existe donc un besoin de réaliser un dispositif de fixation permettant de simplifier le montage d'une pièce en s'affranchissant de l'utilisation d'un gabarit.

Le document FR-2 631 678 décrit un collier de serrage dont une extrémité est pourvue d'une vis de fixation et l'autre extrémité d'une fente de réception de la vis. Un élément élastique est prévu afin d'exercer une poussée sur la vis en direction de la fente. La vis rentre alors automatiquement dans la fente, ce qui permet de limiter les manipulations et de faciliter le montage. Une telle solution est toutefois difficilement applicable à la fixation d'une pièce sur un moteur en raison du poids généralement élevé d'une telle pièce et des vibrations du moteur, qui pourraient faire sortir la vis de sa fente et provoquer la chute de la pièce.

L'invention vise à pallier ces inconvénients en proposant un dispositif de fixation permettant de ne pas utiliser de gabarit pour la fixation d'une pièce sur un carter de moteur.

A cet effet, l'objet de l'invention concerne un dispositif de fixation d'une pièce cylindrique sur un carter de moteur de véhicule automobile, selon la revendication 1.

Grâce aux moyens de pré-assemblage, les demi colliers peuvent supporter la pièce en étant accrochés l'un à l'autre, de sorte que l'utilisation d'un gabarit n'est plus nécessaire. L'absence de force de serrage permet d'ajuster la position de la pièce avant la fixation définitive. La pièce cylindrique peut alors être déplacée par translation suivant sa direction axiale, par rotation autour de cette direction, par rotation autour d'un axe sensiblement perpendiculaire à la platine, et par rotation autour d'un axe sensiblement parallèle à la platine et perpendiculaire aux deux axes de rotation précédents.

Avantageusement la platine présente un moyen de mise en prise d'un demi collier agencé de sorte que le demi collier puisse coulisser par rapport à la platine sur au moins une portion de sa longueur. Ce coulissement permet un ajustement de la position de la pièce suivant cette direction.

Plus particulièrement, le moyen de mise en prise de la platine comprend deux ouvertures situées l'une au dessus de l'autre suivant une direction de la platine, les ouvertures étant destinées à être traversées par le demi collier de sorte que ses extrémités saillent d'un même côté de la platine.

Avantageusement, les moyens de pré-assemblage des demi colliers sont situés sur les mêmes extrémités que les moyens de fixation, l'autre extrémité des demi colliers étant pourvue de moyens d'accrochage.

Avantageusement, les moyens pré-assemblage sont formés d'une languette et d'un orifice de réception de la languette agencés de sorte que lorsque la languette est en prise avec l'orifice de réception, les extrémités des demi colliers pourvues des moyens de pré-assemblage sont légèrement distantes l'une de l'autre. Cette distance est choisie de manière à ce que, dans cette position, les demi colliers n'exercent pas de force de serrage sur la pièce à fixer de sorte que sa position peut être ajustée.

Plus particulièrement, la languette s'étend sensiblement dans un plan sensiblement parallèle à un diamètre d'un cercle formé par les deux demi colliers, et en ce que l'orifice de réception s'étend dans un plan sensiblement perpendiculaire au plan de la languette.

L'invention concerne également l'utilisation d'au moins un dispositif selon l'invention pour fixer un catalyseur sur un carter de moteur à combustion.

L'invention est maintenant décrite en référence aux dessins annexés, non limitatifs, dans lesquels :
- la figure 1 est une représentation en perspective d'un dispositif selon l'invention ;
- la figure 2 est une vue de profil d'une partie du dispositif de la figure 1 ;
- la figure 3 est une représentation en perspective du dispositif de la figure 1 dans une position de pré-assemblage ;
- la figure 4 est une représentation en perspective du dispositif de la figure 1 dans une position fixée, serrée.

Les figures représentent un dispositif de fixation 1 d'un catalyseur sur le carter d'un moteur à combustion interne d'un véhicule automobile.

Le dispositif comprend une platine 2 destinée à être fixée sur le carter du moteur, par exemple par vissage, rivetage ou analogue.

Le dispositif comprend également deux demi colliers 3 et 4 destinés à entourer le corps sensiblement cylindrique du catalyseur afin de le maintenir serré. Dans l'exemple, chaque demi collier est formé d'une bande métallique mise en forme sensiblement suivant un demi cercle.

La platine 2 est formée d'une plaque sensiblement plane et rectangulaire pourvue de deux ouvertures 5, 6 sensiblement de même largeur que les demi colliers 3, 4. Ces ouvertures forment des moyens de mise en prise du demi collier 3 et sont destinées à le recevoir et maintenir. Les ouvertures 5, 6 sont situées l'une au dessus de l'autre suivant la direction longitudinale de la platine. Lorsque la platine est fixée sur le carter du moteur, cette direction longitudinale s'étend sensiblement verticalement, tel que représenté sur les figures. Chaque ouverture 5, 6 présente une longueur suffisante suivant cette direction longitudinale afin de permettre l'introduction d'un demi collier 3, et le coulissement de ce dernier suivant cette même direction.

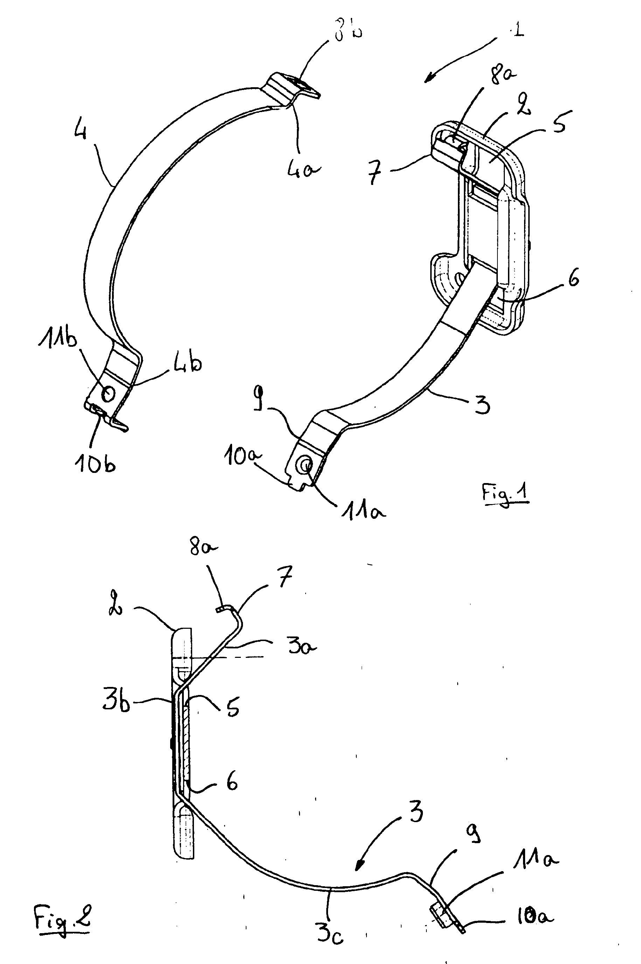

Le demi collier 3 comprend une première partie d'extrémité 3a sensiblement rectiligne, suivie d'une partie 3b adjacente également sensiblement rectiligne inclinée par rapport à la première partie d'extrémité 3a, et une deuxième partie d'extrémité 3c courbe représentant sensiblement la moitié de la longueur du demi collier (figure 2). Le demi collier 3 présente ainsi une forme générale sensiblement en demi cercle.

La longueur de la partie 3b est sensiblement égale à la distance entre les deux ouvertures 5, 6 de la platine afin que, le demi collier 3 étant monté sur la platine, la partie 3b puisse être en appui contre la platine entre les ouvertures 5, 6. Ce demi collier 3, désigné ci-après demi collier inférieur, est monté de sorte que sa partie la plus longue 3c saille de l'ouverture inférieure de la platine, tel que visible sur les figures, et que son autre partie d'extrémité 3a saille du même côté de la platine.

Le demi collier 3 est par exemple monté de la manière suivante sur la platine. Sa deuxième partie d'extrémité 3c est insérée en partie par l'ouverture inférieure 6 de la platine, puis sa première partie d'extrémité 3a est insérée dans l'ouverture supérieure de la platine 5, au besoin en exerçant une légère déformation sur le demi collier, lorsque les deux parties d'extrémités sont insérées, le demi collier est déplacé jusqu'à ce que sa partie 3b soit en appui contre la platine, sur son côté destiné à venir en appui contre le carter du moteur.

L'extrémité supérieure 7 du demi collier 3, correspondant au bord de la première partie d'extrémité 3a, présente un moyen d'accrochage 8a avec le demi collier supérieur 4. L'extrémité inférieure 9 du demi collier 3, correspondant au bord de sa deuxième partie d'extrémité 3c, présente un moyen de pré-assemblage 10a destiné à coopérer avec l'autre demi collier. Un orifice de fixation 11a est prévu dans la partie d'extrémité 3c, à proximité du moyen pré-assemblage 10a. Cet orifice 11a est par exemple fileté afin de permettre le serrage d'une vis.

Le demi collier 4 supérieur présente sensiblement une forme de demi cercle. Il présente au niveau de l'une 4a de ses extrémités, un moyen d'accrochage 8b destiné à coopérer avec le moyen d'accrochage 8a de l'autre demi collier, et au niveau de son autre extrémité 4b, un moyen de pré-assemblage 10b destiné à coopérer avec le moyen de pré-assemblage 10a. De manière similaire à l'autre demi collier, un orifice de fixation 11b, correspondant à l'orifice de fixation 11a, est prévu sur l'extrémité 4b, à proximité du moyen de pré-assemblage 10b.

Dans l'exemple représenté, les moyens d'accrochages 8a, 8b sont formés respectivement d'une languette en saillie 8a et d'un orifice correspondant 8b. L'extrémité 7 supportant la languette 8a s'étend sensiblement dans le prolongement d'un diamètre du cercle formé par les deux demi colliers, l'orifice 8b s'étendant dans un plan sensiblement perpendiculaire lorsque les demi colliers sont assemblés. La languette 8a est recourbée vers la platine, tel que visible sur la figure 2, de manière à éviter sa sortie de l'orifice 8b lorsque les deux demi colliers sont accrochés.

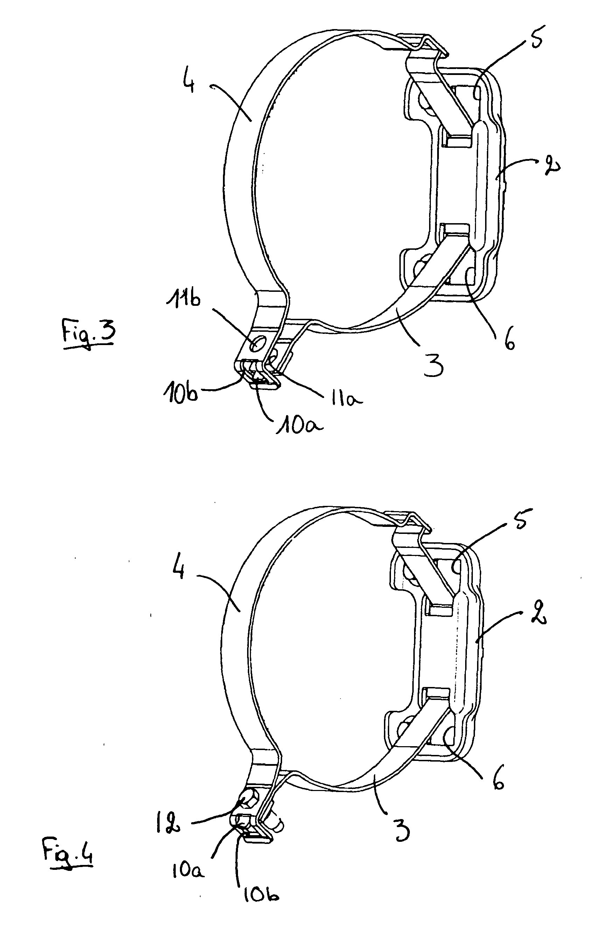

Les extrémités 9 et 4b des demi colliers s'étendent sensiblement dans le prolongement d'un diamètre du cercle formé par les demi colliers de manière à venir en appui l'une contre l'autre lorsque les demi colliers sont fixés ensemble. Les orifices de fixation 11a, 11b correspondent alors afin de permettre le passage d'une vis 12 (figure 4). Les moyens de pré-assemblage 10a, 10b sont formés d'un orifice 10b destiné à recevoir une languette 10a, cette dernière s'étendant sensiblement dans le prolongement de la partie supportant l'orifice de fixation 11a, c'est-à-dire sensiblement dans le prolongement d'un diamètre du cercle formé par les deux demi colliers. L'orifice 10b s'étend dans une partie s'étendant sensiblement perpendiculairement à la partie supportant l'orifice de fixation 11b, c'est-à-dire sensiblement perpendiculairement à la languette 10a lorsque les demi colliers sont pré-assemblés. De cette manière, avant la fixation et le serrage de la vis 12 à travers les orifices 11a, 11b, les demi colliers sont maintenus ensemble par coopération de la languette 10a et de l'orifice 10b, tel que représenté sur la figure 3. Ces moyens de pré-assemblage 10a, 10b sont conçus de manière à ne pas exercer de force de serrage sur un catalyseur qu'ils entourent, de sorte que la position de ce dernier peut être ajustée par déplacement suivant différentes directions de translation et de rotation de manière à subir le moins de tensions possible après fixation. Ainsi, dans cette position, les extrémités 4b et 9 des demi colliers sont distantes, tel que visible sur la figure 3.

La fixation d'un catalyseur est réalisée de la manière suivante. La platine équipée du demi collier inférieur 3, est fixée sur le carter du moteur. Le catalyseur est raccordé aux autres éléments du moteur de sorte que son corps cylindrique soit situé au dessus du demi collier inférieur. Le demi collier supérieur 4 est ensuite accroché sur le demi collier inférieur par coopération de la languette 8a et de l'orifice 8b des moyens d'accrochage, puis l'autre extrémité 4b du demi collier supérieur est accrochée au demi collier inférieur par coopération de la languette 10a et de l'orifice 10b des moyens de pré-assemblage. Le catalyseur est alors soutenu par les deux demi colliers sans l'aide de gabarit, les demi colliers n'exerçant pas de force de serrage sur le catalyseur. La position du catalyseur est alors ajustée, au besoin en déplaçant le demi collier inférieur par rapport à la platine par coulissement suivant la direction longitudinale de la platine. La vis 12 est ensuite introduite dans les orifices correspondant 11a, 11b et vissée de manière à serrer les demi colliers autour du corps du catalyseur et assurer ainsi la fixation de ce dernier sur la platine et le carter.

Deux dispositifs selon l'invention peuvent avantageusement être utilisés pour la fixation d'un catalyseur au carter du moteur, afin d'éviter tout risque de basculement du catalyseur. Lors de l'ajustement de la position du catalyseur, un degré de liberté de ce dernier est alors perdu.

## Revendications

1. Dispositif de fixation (1) destiné à la fixation d'une pièce cylindrique sur un carter de moteur de véhicule automobile, le dispositif comprenant une platine (2) destinée à être solidarisée au carter, et deux demi colliers (3, 4) aptes à entourer la pièce cylindrique à fixer, les demi colliers comportant à une de leur extrémité (9, 4b) des moyens de fixation (11a, 11b), ces extrémités (9, 4b) s'étendant sensiblement dans le prolongement d'un diamètre du cercle formé par les demi colliers de manière à venir en appui l'une contre l'autre lorsque les demi colliers sont fixés ensemble, **caractérisé en ce que** l'un des demi colliers (3) est monté sur la platine (1) au niveau d'une partie distante de ses extrémités et **en ce que** les extrémités des demi colliers sont pourvues de moyens de pré-assemblage (10a, 10b) distincts des moyens de fixation, aptes à les maintenir ensemble avant leur fixation par les moyens de fixation sans exercer de force de serrage sur la pièce à fixer, et **en ce que** les moyens de fixation (11a, 11b) sont des orifices correspondant lorsque les demis colliers sont fixés ensemble afin de permettre le passage d'une vis (12), et les moyens de pré assemblage (10a, 10b) sont formés d'un orifice (10b) destiné à recevoir une languette (10a), cette dernière s'étendant sensiblement dans le prolongement de la partie supportant l'orifice de fixation (11a), sensiblement dans le prolongement d'un diamètre du cercle formé par les deux demi colliers, l'orifice (10b) s'étendant dans une partie s'étendant sensiblement perpendiculairement à la partie supportant l'orifice de fixation (11b), c'est-à-dire sensiblement perpendiculairement à la languette (10a) lorsque les demi colliers sont pré assemblés.

2. Dispositif de fixation selon la revendication 1, **caractérisé en ce que** la platine (2) présente un moyen de mise en prise d'un demi collier (3) agencé de sorte que le demi collier puisse coulisser par rapport à la platine sur au moins une portion de sa longueur.

3. Dispositif de fixation selon la revendication 2, **caractérisé en ce que** le moyen de mise en prise de la platine comprend deux ouvertures (5, 6) situées l'une au dessus de l'autre suivant une direction de la platine, les ouvertures étant destinées à être traversées par le demi collier (3) de sorte que ses extrémités saillent d'un même côté de la platine.

4. Dispositif de fixation selon l'une des revendications 1 à 3, **caractérisé en ce que** les moyens de pré-assemblage (10a, 10b) des demi colliers sont situés sur les mêmes extrémités que les moyens de fixation (11a, 11b), l'autre extrémité des demi colliers étant pourvue de moyens d'accrochage (8a, 8b).

5. Dispositif de fixation selon l'une des revendications 1 à 4, **caractérisé en ce que** les moyens pré-assemblage (10a, 10b) sont formés d'une languette (10a) et d'un orifice de réception (10b) de la languette agencés de sorte que, lorsque la languette est en prise avec l'orifice de réception, les extrémités (7, 4a) des demi colliers pourvues des moyens de pré-assemblage (10a, 10b) sont légèrement distantes l'une de l'autre.

6. Utilisation d'au moins un dispositif de fixation (1) selon l'une des revendications 1 à 5 pour fixer un catalyseur sur un carter de moteur à combustion.

## Claims

1. Fastening device (1) designed for the fastening of a cylindrical part on an engine housing of a motor vehicle, the device comprising a plate (2) designed to be secured to the housing, and two half-collars (3, 4) capable of surrounding the cylindrical part to be fastened, the half-collars comprising fastening means (11a, 11b) at one of their ends (9, 4b), these ends (9, 4b) extending substantially in the extension of a diameter of the circle formed by the half-collars so as to rest against one another when the half-collars are fastened together, **characterized in that** one of the half-collars (3) is mounted on the plate (1) at a portion distant from its ends and **in that** the ends of the half-collars are provided with preassembly means (10a, 10b) distinct from the fastening means, capable of holding them together before they are fastened by the fastening means without exerting clamping force on the part to be fastened, and **in that** the fastening means (11a, 11b) are corresponding orifices when the half-collars are fastened together in order to allow the passage of a screw (12), and the preassembly means (10a, 10b) are formed of an orifice (10b) designed to receive a tongue (10a), the latter extending substantially in the extension of the portion supporting the fastening orifice (11a), substantially in the extension of a diameter of the circle formed by the two half-collars, the orifice (10b) extending in a portion extending substantially perpendicularly to the portion supporting the fastening orifice (11b), that is to say substantially perpendicularly to the tongue (10a) when the half-collars are preassembled.

2. Fastening device according to Claim 1, **characterized in that** the plate (2) has a means for engaging a half-collar (3) arranged so that the half-collar can slide relative to the plate over at least a portion of its length.

3. Fastening device according to Claim 2, **characterized in that** the engagement means of the plate comprises two apertures (5, 6) situated one above the other in a direction of the plate, the apertures being designed to be traversed by the half-collar (3) so that its ends protrude on one and the same side of the plate.

4. Fastening device according to one of Claims 1 to 3, **characterized in that** the preassembly means (10a, 10b) of the half-collars are situated on the same ends as the fastening means (11a, 11b), the other end of the half-collars being provided with coupling means (8a, 8b).

5. Fastening device according to one of Claims 1 to 4, **characterized in that** the preassembly means (10a, 10b) are formed of a tongue (10a) and of a receiving orifice (10b) for receiving the tongue, said means being arranged so that, when the tongue is engaged with the receiving orifice, the ends (7, 4a) of the half-collars provided with the preassembly means (10a, 10b) are at a slight distance from one another.

6. Use of at least one fastening device (1) according to one of Claims 1 to 5 in order to fasten a catalytic converter to a combustion engine housing.

## Patentansprüche

1. Befestigungsvorrichtung (1), die zur Befestigung eines zylindrischen Bauteils auf einem Motorgehäuse eines Kraftfahrzeugs bestimmt ist, wobei die Vorrichtung eine Platte (2), die dazu bestimmt ist, fest mit dem Gehäuse verbunden zu werden, und zwei Halbschellen (3, 4) enthält, die das zu befestigende zylindrische Bauteil umgeben können, wobei die Halbschellen an einem ihrer Enden (9, 4b) Befestigungseinrichtungen (11a, 11b) aufweisen, wobei diese Enden (9, 4b) sich im Wesentlichen in der Verlängerung eines Durchmessers des Kreises erstrecken, der von den Halbschellen geformt wird, um gegeneinander in Auflage zu kommen, wenn die Halbschellen aneinander befestigt werden, **dadurch gekennzeichnet, dass** eine der Halbschellen (3) auf die Platte (1) in einem von ihren Enden fernen Bereich montiert ist, und dass die Enden der Halbschellen mit sich von den Befestigungseinrichtungen unterscheidenden Vormontageeinrichtungen (10a, 10b) versehen sind, die sie vor ihrer Befestigung durch die Befestigungseinrichtungen zusammenhalten können, ohne eine Klemmkraft auf das zu befestigende Bauteil auszuüben, und dass die Befestigungseinrichtungen (11a, 11b) Öffnungen sind, die einander entsprechen, wenn die Halbschellen aneinander befestigt sind, um den Durchgang einer Schraube (12) zu erlauben, und die Vormontageeinrichtungen (10a, 10b) von einer Öffnung (10b) geformt werden, die dazu bestimmt ist, eine Zunge (10a) aufzunehmen, wobei letztere sich im Wesentlichen in der Verlängerung des Teils erstreckt, der die Befestigungsöffnung (11a) trägt, im Wesentlichen in der Verlängerung eines Durchmessers des von den zwei Halbschellen geformten Kreises, wobei die Öffnung (10b) sich in einem Teil erstreckt, der sich im Wesentlichen lotrecht zu dem Teil erstreckt, der die Befestigungsöffnung (11b) trägt, d.h. im Wesentlichen lotrecht zur Zunge (10a), wenn die Halbschellen vormontiert sind.

2. Befestigungsvorrichtung nach Anspruch 1, **dadurch gekennzeichnet, dass** die Platte (2) eine Eingreifeinrichtung einer Halbschelle (3) aufweist, die so ausgebildet ist, dass die Halbschelle bezüglich der Platte über mindestens einen Teil ihrer Länge gleiten kann.

3. Befestigungsvorrichtung nach Anspruch 2, **dadurch gekennzeichnet, dass** die Eingreifeinrichtung der Platte zwei Öffnungen (5, 6) enthält, die in einer Richtung der Platte übereinander angeordnet sind, wobei die Öffnungen dazu bestimmt sind, von der Halbschelle (3) so durchquert zu werden, dass ihre Enden auf der gleichen Seite der Platte vorstehen.

4. Befestigungsvorrichtung nach einem der Ansprüche 1 bis 3, **dadurch gekennzeichnet, dass** die Vormontageeinrichtungen (10a, 10b) der Halbschellen sich auf den gleichen Enden wie die Befestigungseinrichtungen (11a, 11b) befinden, wobei das andere Ende der Halbschellen mit Einhakeinrichtungen (8a, 8b) versehen ist.

5. Befestigungsvorrichtung nach einem der Ansprüche 1 bis 4, **dadurch gekennzeichnet, dass** die Vormontageeinrichtungen (10a, 10b) von einer Zunge (10a) und von einer Aufnahmeöffnung (10b) der Zunge gebildet werden, die so ausgebildet sind, dass, wenn die Zunge mit der Aufnahmeöffnung in Eingriff ist, die Enden (7, 4a) der Halbschellen, die mit den Vormontageeinrichtungen (10a, 10b) versehen sind, einen leichten Abstand zueinander haben.

6. Verwendung mindestens einer Befestigungsvorrichtung (1) nach einem der Ansprüche 1 bis 5, um einen Katalysator an einem Gehäuse eines Verbrennungsmotors zu befestigen.
